# EUROPÄISCHE PATENTSCHRIFT

(11) **EP 3 592 009 B1**
(45) Veröffentlichungstag und Bekanntmachung des Hinweises auf die Patenterteilung: **11.10.2023**
(21) Anmeldenummer: 19184589.0
(22) Anmeldetag: 05.07.2019
(51) Int. Cl.: H04W 4/70, H04L 67/12

(54) **STELLANTRIEB FÜR FERNKOMMUNIKATION**
LONG-RANGE ACTUATOR
ACTIONNEUR LONGUE PORTÉE

(30) Priorität: 05.07.2018 DE 102018116337
(43) Veröffentlichungstag der Anmeldung: 08.01.2020
(73) Patentinhaber: AUMA Riester GmbH & Co. KG, 79379 Müllheim (DE)
(72) Erfinder: Stenzel, Rüdiger, 57271 Hilchenbach (DE); Ortlieb, Andreas, 79219 Staufen (DE); Bruch, Dennis, 57482 Wenden (DE)
(74) Vertreter: Mertzlufft-Paufler, Cornelius

(56) Entgegenhaltungen:
- CN-U- 207 455 845
- US-A1- 2011 111 700
- ST\'EPHANE DELBRUEL ET AL: "FLIP: Federation support for Long range low power Internet of things Protocols", ARXIV.ORG, CORNELL UNIVERSITY LIBRARY, 201 OLIN LIBRARY CORNELL UNIVERSITY ITHACA, NY 14853, 21. Dezember 2017 (2017-12-21), XP081314353,

## Beschreibung

Die Erfindung beschreibt einen Stellantrieb mit einer Kommunikationseinheit, die zur Kommunikation mit einer Steuerzentrale über eine Funkverbindung im SubGHz Bereich ausgebildet ist.

Stellantriebe verfügen in der Regel über eine lokale Serviceschnittstelle, über die eine Konfiguration und Fehlerdiagnose erfolgen kann.

Diese Serviceschnittstelle kann drahtgebunden oder drahtlos ausgebildet sein. Üblicherweise werden im Stand der Technik bekannte drahtlose Funkverbindungen über WLAN oder Bluetooth eingesetzt. Diese besitzen jedoch eine sehr geringe Reichweite, so dass zur Benutzung der Serviceschnittstelle eine gewisse räumliche Nähe bestehen muss.

Um beispielsweise eine Diagnose an allen Stellantrieben einer Anlage vorzunehmen, muss trotz Funkverbindung ein Techniker zu jedem Stellantrieb hingehen. Insbesondere bei großen Anlagen mit verteilt angeordneten Stellantrieben ist somit ein erheblicher zeitlicher Aufwand erforderlich.

Aus der US 2011/0111700 A1 ist ein drahtloses Steuersystem bekannt, bei der beispielsweise Aktoren über eine Funkverbindung steuerbar sind.

Aus CN 207455845 U ist ein drahtloses Kontrollsystem bekannt, das auf der LoRa Technologie aufbaut.

Stéphane Delbruel et al., FLIP: Federation support for Long range low power Internet of things Protocols, arXiv.org, 20171221 Cornell University Library, 201 Olin Library Cornell University Ithaca, NY 14853, 21. Dezember 2017, XP081314353, beschreibt ein Internet of things System mit LoRa Unterstützung.

Aufgabe der Erfindung ist es, einen Stellantrieb der oben genannten Art zu schaffen, der energiesparend betrieben wirden kann.

Diese Aufgabe wird erfindungsgemäß durch einen Stellantrieb mit den Merkmalen des Hauptanspruch gelöst.

Der erfindungsgemäße Stellantrieb ist insbesondere dadurch gekennzeichnet, dass er einen Energiesparmodus aufweist, der durch Empfangen eines Wecksignals über die Funkverbindung beendbar ist.

In einer vorteilhaften Ausführung ist in dem Energiesparmodus nur die Kommunikationseinheit aktiviert. Eine Steuerung des Stellantriebs, insbesondere ein vorhandener Antriebsmotor und die zugehörige Leistungssteuerung sind jedoch ausgeschaltet.

Der Energiesparmodus wird von außen durch das Wecksignal beendet. In diesem Fall kann durch Auswerten des Wecksignals entschieden werden, ob die Antriebssteuerung aktiviert werden soll. Vorteilhaft ist es dabei, wenn das Wecksignal eine zusätzliche Information enthält.

Bei einem Stellantrieb der eingangs beschriebenen Art liegt die Funkverbindung auf einem Frequenzband im Sub-GHz Bereich. Die verwendete Übertragungsfrequenz beträgt dabei weniger als 1 GHz. Für die drahtlose Übertragung sind beispielsweise in Deutschland die Frequenzbänder EU433, mit Frequenzen zwischen 433,05 MHz und 434,79 MHz, und EU863-870, mit Frequenzen zwischen 863 MHz und 870 MHz, zugelassen. In anderen Ländern können auch andere und/oder weitere Frequenzbänder zugelassen sein. Durch die größere Wellenlänge der Funkwellen gegenüber beispielsweise dem üblichen 2,4 GHz Frequenzband wird eine wesentlich höhere Reichweite erzielt.

Für die Datenübertragung stehen mehrere Protokolle zur Verfügung, beispielsweise 6LoWPAN, WMBUS, SigFox, LoRaWAN oder andere.

Insbesondere vorteilhaft ist es, wenn die Funkverbindung das LoRaWAN-Protokoll benutzt. Auf diese Weise sind Reichweiten bis über 20 km möglich. Damit können auch in sehr großen Anlagen weit verteilte Stellantriebe bequem von einem zentralen Ort von einer Steuerzentrale angesprochen werden.

Ein weiterer Vorteil besteht in der sehr geringen Energieaufnahme des LoRaWAN. In einer vorteilhaften Ausführung weist der Stellantrieb eine dezentrale und/oder autarke Energieversorgung auf. Dies hat den Vorteil, dass an sehr entlegenen, schwer zugänglichen Orten ein Stellantrieb über einen sehr langen Zeitraum beispielsweise mit einer kompakten Batterie betrieben werden kann.

In einer vorteilhaften Ausführung weist der Stellantrieb wenigstens eine gerichtete Antenne auf. Durch Ausrichten der Sende- und Empfangs-Antennen kann die Reichweite erhöht und/oder die Energieaufnahme gesenkt werden.

Dabei kann insbesondere die Antenne des Stellantriebs als Richtantenne ausgebildet sein, die auf die Steuerzentrale oder eine Zwischenstation ausgerichtet ist. Prinzipiell kann auch die Antenne der Steuerzentrale gerichtet sein. Wenn die Stellantriebe im Netzwerk jedoch um die Steuerzentrale herum verteilt angeordnet sind, kann eine omnidirektionale Antenne vorteilhaft sein.

In einer weiteren vorteilhaften Ausführung weist der Stellantrieb mehrere Antennen auf.

Dabei können die Antennen gleichzeitig verwendet werden, um Übertragungsfehler mittels Antennendiversität zu minimieren.

Die Antennen können auch je nach Signalqualität oder Entfernung ausgewählt werden, so dass immer nur eine passende Antenne aktiv ist. Insbesondere vorteilhaft ist es, wenn Antennen mit verschiedenen Verstärkungen vorhanden sind.

Insbesondere vorteilhaft kann es sein, wenn die Sendeleistung erhöht wird, wenn die Signalqualität schlechter ist und umgekehrt.

Aufgrund der großen Wellenlänge ist die Durchdringung der Funkverbindung recht gut. Dennoch kann es bei Stellantrieben mit Metallgehäuse oder bei sehr großen Entfernungen vorteilhaft sein, wenn wenigstens eine Antenne außerhalb eines Gehäuses des Stellantriebs angeordnet ist.

Es kann jedoch auch zweckmäßig sein, wenn die Antenne separat vom Gehäuse an einem für die Funkverbindung günstigen Ort angeordnet ist, etwa in erhöhter Position auf einem Dach oder Mast.

Die Funkverbindungen im Netzwerk können alle im selben Frequenzband liegen. In einer vorteilhaften Ausführung kann die Kommunikationseinheit dazu ausgebildet sein, verschiedene Frequenzbänder zu nutzen. So kann beispielsweise für einen weiter entfernt liegenden Stellantrieb ein Frequenzband mit einer kleineren Frequenz verwendet werden. Die Steuerzentrale und/oder der Stellantrieb können so ausgebildet sein, dass sie die Entfernung selbstständig ermitteln und eine entsprechende Frequenz automatisch auswählen.

Dabei kann es vorteilhaft sein, wenn der Stellantrieb für jede Frequenz wenigstens eine zugeordnete Antenne aufweist. Auf diese Weise kann die Antenne optimal auf die Frequenz abgestimmt sein, wodurch eine bessere Sende- und Empfangsleistung möglich ist.

In einer weiteren vorteilhaften Ausführung weist der Stellantrieb für jede Frequenz wenigstens zwei Antennen auf, und wie oben beschrieben die Antenne je nach Signalqualität und/oder Entfernung ausgewählt wird.

Prinzipiell kann es vorteilhaft sein, wenn die Sendeleistung an die Entfernung angepasst ist, wodurch insbesondere bei geringen Entfernungen Energie gespart wird, durch eine Reduktion der Sendeleistung.

Die Kommunikationseinheit unterhält gleichzeitig zwei Funkverbindungen mit der Steuerzentrale. Diese Funkverbindungen können dabei gleichwertig und somit redundant sein. Es kann jedoch auch vorteilhaft sein, wenn eine Funkverbindung ausschließlich zum Senden benutzt wird, während die andere ausschließlich zum Empfangen dient.

Die Funkverbindungen benutzen unterschiedliche Frequenzen. Diese Frequenzen können dabei im selben Frequenzband oder in unterschiedlichen Frequenzbändern liegen. Im Beispiel von oben, würde demnach eine Funkverbindung eine Frequenz im 433 MHz Band benutzen die andere im SRD 868 MHz Band. Auf diese Weise ist die Kommunikation wenig störanfällig. Insbesondere vorteilhaft, wenn die beiden Funkverbindungen redundant dieselben Daten übertragen.

Die Sendeleistung wird an die Übertragungsfrequenz angepasst, wobei insbesondere bei hohen Frequenzen die Sendeleistung höher ist und bei kleinen Frequenzen kleiner. Dadurch ist ein energiesparender Betrieb möglich und es wird erreicht, dass die beiden Sendefrequenzen etwa die gleiche Reichweite erzielen.

In einer Ausführung der Erfindung besitzt der Stellantrieb eine autarke und/oder dezentrale Energieversorgung. Das bedeutet, dass kein Zugang zu einem Stromnetz vorhanden ist. Dies kann insbesondere an entlegenen Orten, etwa entlang einer Pipeline, vorteilhaft sein. Aufgrund der geringen Energieaufnahme der Kommunikationseinheit ist ein Betrieb über einen sehr langen Zeitraum, insbesondere bis zu mehreren Jahren, möglich. Die Energieversorgung kann beispielsweise über einen Akkumulator erfolgen, der über eine Solarzelle gespeist wird.

Um hier eine weitere Energieeinsparung zu erzielen kann es zweckmäßig sein, wenn die Funkverbindung nur periodisch oder zu festgelegten Zeitpunkten und/oder nur bei ausreichender Energieversorgung aktiviert wird. Hierbei kann vorgesehen sein, dass in einer Steuerzentrale hinterlegt ist und ausgewertet wird, zu welchen Zeitpunkten der Stellantrieb erreichbar, also die Funkverbindung aktivierbar oder aktiviert ist.

Die Erfindung umfasst weiterhin eine Steuerzentrale mit einer Kommunikationseinheit, die zur Kommunikation mit einem erfindungsgemäßen Stellantrieb über eine drahtlose Funkverbindung ausgebildet ist, wobei die Funkverbindung auf einem Frequenzband im Sub-GHz Bereich liegt.

Eine Steuerzentrale bildet mit einem oder mehreren erfindungsgemäßen Stellantrieben grundsätzlich ein sternförmiges Netzwerk, in dem in der Regel nur eine Steuerzentrale vorhanden ist. Aufgrund der großen Reichweite der Funkverbindung kann die Steuerzentrale an einem Ort eingerichtet sein, der bequem und einfach erreichbar oder zugänglich ist. Die Steuerzentrale kann auch eine mobile Steuerzentrale sein, etwa ein mobiler Computer oder ein Tablet.

Die Erfindung ist besonders vorteilhaft in einem System bestehend aus einer Steuerzentrale und wenigstens einem erfindungsgemäßen Stellantrieb verwendbar.

Die Erfindung ist nachfolgend anhand eines bevorzugten Ausführungsbeispiels mit Bezug auf die beiliegenden Zeichnungen näher erläutert.

### Es zeigt:

- Fig. 1:: ein Punkt-zu-Punkt Netzwerk mit einer erfindungsgemäßen Steuerzentrale und mehreren erfindungsgemäßen Stellantrieben,
- Fig. 2:: ein Ablaufdiagramm zum Aufbau einer Funkverbindung von der Steuerzentrale,
- Fig. 3:: ein Ablaufdiagramm vom Aufbau einer Funkverbindung vom Stellantrieb,
- Fig. 4:: ein Ablaufdiagramm zum Aufwecken eines Stellantriebs von der Steuerzentrale,
- Fig. 5:: ein Ablaufdiagramm des Aufweckvorgangs vom Stellantrieb,

- Fig. 6:: ein Ablaufdiagramm zum Routen einer Funkverbindung von der Steuerzentrale und
- Fig. 7:: ein Ablaufdiagramm vom Routen einer Funkverbindung vom Stellantrieb.

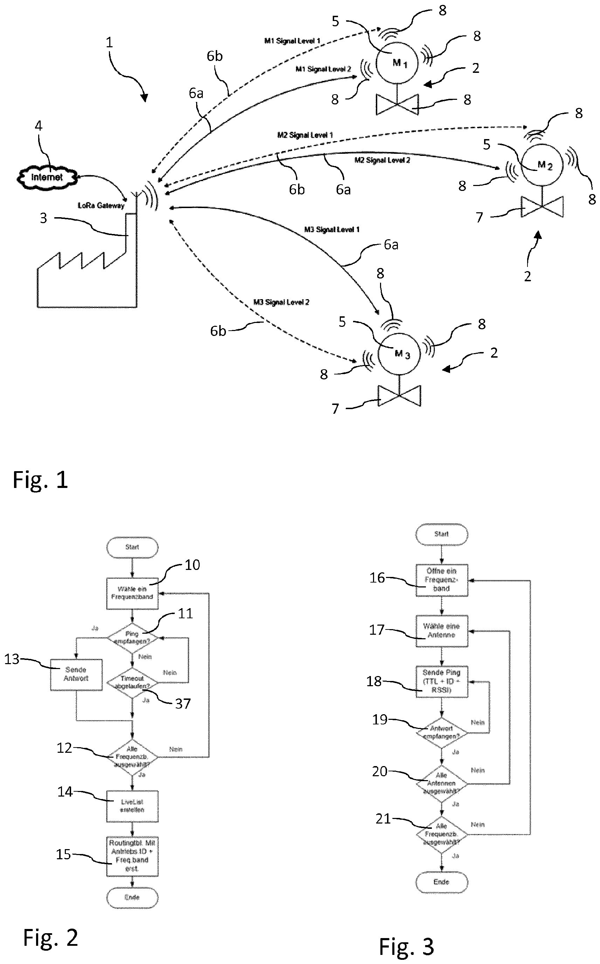

Die Fig. 1 zeigt beispielhaft ein System 1 aus mehreren Stellantrieben 2 und einer Steuerzentrale 3. Die Steuerzentrale 3 ist im Beispiel als Gebäude dargestellt. Die Steuerzentrale 3 ist jedoch nicht an einen Ort gebunden und kann auch durch einen mobilen Computer oder ein Tablet gebildet sein.

Die Steuerzentrale 3 kann zusätzlich mit dem Internet 4 verbunden sein, wodurch auch Fernzugriffe auf die Steuerzentrale 3 und somit das System 1 möglich sind. Die Steuerzentrale 3 weist eine Antenne 8 auf, über die Funkverbindungen zu der Steuerzentrale 3 aufbaubar sind. Dem Fachmann ist klar, dass die Steuerzentrale auch mehrere Antennen 8 aufweisen kann.

Im System 1 sind im Beispiel drei Stellantriebe 2 angeordnet. Jeder Stellantrieb 2 weist eine Kommunikationseinheit 5 auf, mit der eine Punkt-zu-Punkt Funkverbindung 6 zur Steuerzentrale 3 aufgebaut oder aufbaubar ist. Die Stellantriebe 2 bilden mit der Steuerzentrale 3 ein geschlossenes Netzwerk.

Neben der Kommunikationseinheit 5 weist ein Stellantrieb 2 in der Regel ein Stellwerk 7 auf, das beispielsweise einen Antriebsmotor besitzt, der ein Stellglied antreibt. Ein solches Stellwerk 7 kann beispielsweise ein Ventil oder ein Schieber sein. Die Art des Stellantriebs 2 spielt für die Erfindung keine Rolle, weshalb hier nur die Angaben gemacht sind, die für das Verständnis der Erfindung hilfreich sind.

Die Erfindung soll in keiner Weise auf eine der genannten Stellantriebe 2 eingeschränkt sein.

Erfindungsgemäß basiert das Netzwerk des Systems 1 auf Punkt-zu-Punkt Funkverbindungen 6 zwischen der Steuerzentrale 3 und jedem Stellantrieb 2. Die Funkverbindungen 6 benutzen dabei ein Frequenzband im Sub-GHz Bereich. Sie besitzen demnach eine Frequenz, die kleiner als 1 GHz ist. Eine Funkverbindung benutzt dabei eine in dem jeweiligen Land zugelassene Frequenz. Einige Beispiele für Frequenzbänder und Frequenzen in ausgewählten Ländern sind in der nachfolgenden Tabelle angegeben. Eine vollständige Liste der zugelassenen Frequenzen in allen Ländern ist über die LoRa Alliance^{™} erhältlich.

| Land | Band | Frequenz |
|---|---|---|
| Deutschland (EU) | EU433 | 433,05 - 434,79 MHz |
| | EU863-87 | 863 - 870 MHz |
| USA | US902-928, AU915-928 | 902 - 928 MHz |
| Russland | RU864-870 | 866 - 868 MHz (Lizensiert) |
| | RU864-870 | 864 - 865 MHz |
| | RU864-870 | 868,7 - 869,2 MH |
| | EU433 | 433,075 - 434,75 MHz |
| | Other | 916 - 921 MHz (Lizensiert) |
| China | AS923 | 920.5 - 924.5 MHz |
| | CN779-787 | 779 - 787 MHz |
| | CN470-510 | 470 - 510 MHz |
| | EU433 | 433,05 - 434,79 MHz |
| | Other | 314 - 316 MHz |
| | Other | 430 - 432 MHz |
| | Other | 840 - 845 MHz |

Die Erfindung ist daher nicht auf ein bestimmtes Frequenzband eingeschränkt. Allerdings kann es sinnvoll sein, den Stellantrieb, insbesondere die Antenne oder Antennen, für ein oder mehrere in dem jeweiligen Zielgebiet zugelassenen Frequenzbänder anzupassen, da so die Antennen eine optimale Sende- und Empfangsleistung erreichen können.

Im Beispiel sind die Stellantriebe 2 derart ausgebildet, dass sie zwei Funkverbindungen 6 gleichzeitig mit der Steuerzentrale 3 aufbauen und unterhalten. Dabei benutzen beide Funkverbindungen 6 unterschiedliche Frequenzbänder. Die Stellantriebe 2 besitzen dazu jeweils mindestens eine Antenne 8, die einem Frequenzband fest zugeordnet ist. Somit kann die Antenne 8 genau auf das jeweilige Frequenzband abgestimmt sein. Eine jeweils erste Funkverbindung 6a benutzt beispielsweise ein Frequenzband mit einer Frequenz im in der EU freigegebenen EU433 Band. Eine jeweils zweite Funkverbindung 6b benutzt beispielsweise das EU863-870 Frequenzband. Selbstverständlich können auch andere freigegebene oder regulierte Frequenzbänder genutzt werden.

Optional können die Antennen 8 der Stellantriebe 2 gerichtete Antennen sein, die auf die Steuerzentrale 3 ausgerichtet sind, wodurch die Reichweite vergrößert oder die Energieaufnahme reduziert werden kann.

Die beiden Funkverbindungen 6 sind im Beispiel redundant ausgelegt. Das bedeutet, dass alle Daten jeweils über beide Funkverbindungen 6 parallel übertragen werden. Da beide Frequenzbänder unterschiedliche Störanfälligkeiten aufweisen, wirkt sich eine Störungsursache nicht unbedingt auf beide Funkverbindungen 6 aus. Dadurch wird eine sehr hohe Übertragungssicherheit erreicht.

Für die Funkverbindungen 6 wird im Beispiel das LoRaWAN Protokoll benutzt. Dieses Protokoll besitzt eine sehr hohe Reichweite, eine geringe Energieaufnahme und eine einfache Implementierung.

Aufgrund der geringen Energieaufnahme des Stellantriebs 2 kann die Energieversorgung beispielsweise durch eine dezentrale Energieversorgung erfolgen. Insbesondere an abgelegenen Orten kann ein Stellantrieb 2 beispielsweise über ein Solarpanel, ein Windrad oder über Wasserkraft gespeist sein.

Um eine Funkverbindung 6 in dem System 1 aufzubauen, muss ein Stellantrieb 2 zunächst im Netzwerk initialisiert sein.

Diese Initialisierung erfolgt von der Steuerzentrale 3 gemäß dem Ablaufdiagramm der Fig. 2.

Dazu wird in der Steuerzentrale zunächst ein Frequenzband ausgewählt 10 auf dem Ping-Nachrichten empfangen 11 werden. Eine solche Ping-Nachricht wird von einem Stellantrieb in der Initialisierung verschickt, wie mit Bezug auf Fig. 3 später erläutert wird.

Ist auch nach einer vorbestimmten Wartezeit 34 keine Ping-Nachricht empfangen worden, wird geprüft, ob bereits alle möglichen Frequenzbänder geprüft wurden 12. Falls nein, wird der Empfang auf einem anderen Frequenzband wiederholt 10.

Falls jedoch eine Ping-Nachricht empfangen wurde, wird eine Antwort gesendet 13 und mit der Prüfung 12, ob alle Frequenzbänder abgesucht wurden fortgesetzt.

Wenn alle Frequenzbänder abgesucht wurden, wird eine Liste der Funkverbindungen erstellt 14. Anschließend wird eine Routing-Tabelle erstellt, die mindestens eine eindeutige Adresse (ID) eines Stellantriebs und das Frequenzband der Funkverbindung enthält. Diese Routing-Tabelle dient später zum Aufbau einer Funkverbindung zur Datenübertragung und zur Definition des Netzwerks.

Die Fig. 3 zeigt ein Ablaufdiagramm der Initialisierung vom Stellantrieb 2. Der Stellantrieb 2 öffnet zunächst ein Frequenzband 16. Dazu wird eine passende Antenne 8 ausgewählt 17. Anschließend wird eine Ping-Nachricht gesendet 18. Diese Ping-Nachricht enthält mindestens eine eindeutige Kennung (ID) des Stellantriebs 2, eine Empfangssignalstärke (RSSI) und eine Gültigkeitsdauer (TTL), innerhalb derer auf die Nachricht geantwortet werden kann.

Anschließend wird geprüft 19, ob in der Gültigkeitsdauer eine Antwort der Steuerzentrale 3 empfangen wurde. Falls nicht, wird eine neue Ping-Nachricht gesendet 18.

Sobald eine Antwort empfangen wurde, wird geprüft 20, ob bereits alle vorhandenen Antennen 8 ausgewählt wurden. Falls nein, wird mit der Auswahl 17 einer neuen Antenne fortgesetzt.

Falls ja, wird geprüft 21, ob alle Frequenzbänder ausgewählt wurden. Falls nein, wird mit dem Öffnen 16 eines neuen Frequenzbandes fortgesetzt. Falls ja, ist die Initialisierung beendet.

Die Steuerzentrale 3 besitzt nun in ihrer Routing-Tabelle alle Antennen und Frequenzbänder, unter denen der Stellantrieb 2 erreichbar ist.

Der Stellantrieb 2 besitzt zur weiteren Energieeinsparung einen Schlafmodus, in dem keine dauerhafte Funkverbindung aufrechterhalten wird. Die Kommunikationseinheit wird beispielsweise periodisch aktiviert, um Aufwecksignale zu empfangen.

Darüber hinaus kann sich auch das Stellwerk in einem Energiesparmodus befinden 38.

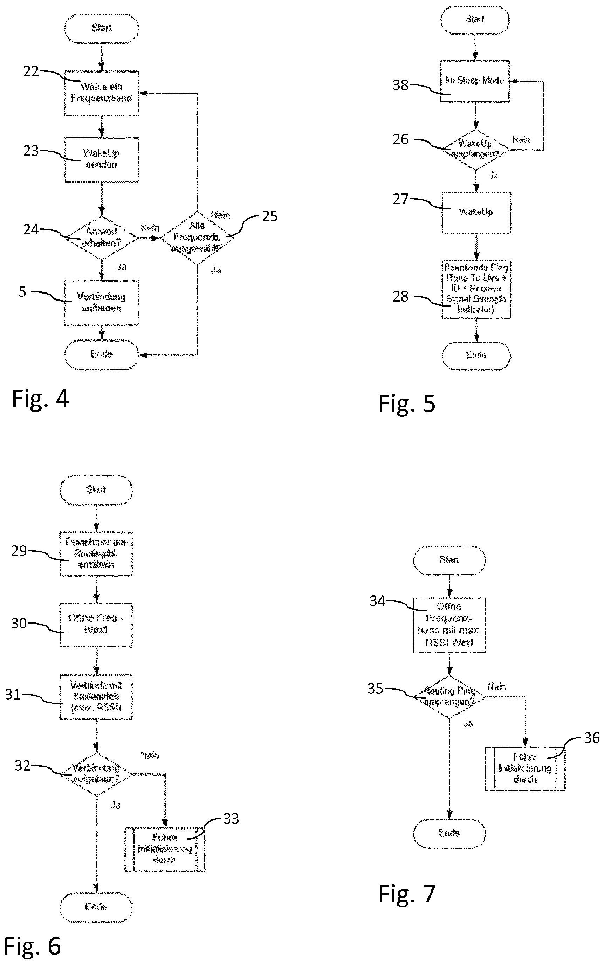

Zum Aufwecken eines Stellantriebs 2 sendet die Steuerzentrale 3 ein Aufwecksignal an einen Stellantrieb 2 gemäß dem Ablaufschema der Fig. 4. Zunächst wird ein Frequenzband ausgewählt 22 und ein Aufwecksignal gesendet 23.

Wurde eine Antwort auf das Aufwecksignal erhalten 24, wird eine Funkverbindung zum Stellantrieb aufgebaut.

Falls keine Antwort erhalten wurde, wird zunächst geprüft 25, ob alle Frequenzbänder ausgewählt wurden. Falls nein, wird ein neues Frequenzband ausgewählt 22 und der Vorgang wiederholt. Ansonsten war das Aufwecken erfolglos und wird beendet.

Der Stellantrieb 2 befindet sich gemäß Fig. 5 im Schlafmodus 38. Hier wird periodisch geprüft 26, ob ein Aufwecksignal empfangen wurde.

Falls ja, wird der Stellantrieb aufgeweckt 27 und eine Ping-Nachricht gesendet 28, die wie die Ping-Nachricht der Initialisierung mindestens eine ID, eine TTL und eine RSSI enthält.

Die Kommunikation mit einem Stellantrieb 2 erfolgt gemäß dem Ablaufdiagramm der Fig. 6. Der Stellantrieb 2, mit dem eine Funkverbindung 6 aufgebaut werden soll, wird aus der Routing-Tabelle ermittelt 29. Das dort gespeicherte Frequenzband wird geöffnet 30 und eine Funkverbindung hergestellt 31, wobei zunächst die maximale Sendeleistung verwendet wird. Falls die Verbindung nicht aufgebaut werden konnte 32, wird eine Initialisierung gemäß Fig. 2 durchgeführt 33. Ansonsten kann über die Funkverbindung kommuniziert werden.

Auf Seite des Stellantriebs erfolgt das Routing gemäß dem Ablaufdiagramm der Fig. 7. Der Stellantrieb 2 öffnet 34 ein Frequenzband zunächst mit der maximalen Leistung und wartet 25 auf den Empfang einer Antwort der Steuerzentrale 3. Falls dies nicht erfolgt, wird eine Initialisierung durchgeführt 36, gemäß Fig. 3.

### Bezugszeichenliste

- 1: Netzwerk
- 2: Stellantrieb
- 3: Steuerzentrale
- 4: Internet
- 5: Kommunikationseinheit
- 6: Funkverbindung
- 6a: Funkverbindung Frequenzband 1
- 6b: Funkverbindung Frequenzband 2
- 7: Stellwerk
- 8: Antenne
- 10: Frequenzband auswählen
- 11: Ping-Nachricht empfangen
- 12: Alle Frequenzbänder ausgewählt?
- 13: Antwort senden
- 14: Teilnehmerliste erstellen
- 15: Routing-Tabelle erstellen
- 16: Frequenzband öffnen
- 17: Antenne auswählen
- 18: Ping-Nachricht senden
- 19: Antwort empfangen?
- 20: Alle Antennen ausgewählt?
- 21: Alle Frequenzbänder ausgewählt?
- 22: Frequenzband auswählen
- 23: Aufwecksignal senden
- 24: Antwort erhalten?
- 25: Alle Frequenzbänder ausgewählt?
- 26: Aufwecksignal empfangen?
- 27: Aufwachen
- 28: Antwort senden
- 29: Teilnehmer ermitteln
- 30: Frequenzband öffnen
- 31: Funkverbindung herstellen
- 32: Funkverbindung aufgebaut?
- 33: Initialisierung durchführen
- 34: Frequenzband öffnen
- 35: Antwort empfangen?
- 36: Initialisierung durchführen
- 37: Wartezeit abgelaufen?
- 38: Stellantrieb im Schlafmodus

## Patentansprüche

1. Stellantrieb (2) mit einer Kommunikationseinheit (5), die zur Kommunikation mit einer Steuerzentrale (3) über eine Funkverbindung (6) im Sub-GHz Bereich ausgebildet ist, wobei der Stellantrieb (2) eine mit der Kommunikationseinheit (5) verbundene Antenne (8) aufweist, wobei der Stellantrieb (2) einen Energiesparmodus aufweist, der durch Empfangen (26) eines Wecksignals über die Funkverbindung (6) beendbar ist, **dadurch gekennzeichnet, dass** die Kommunikationseinheit (5) gleichzeitig zwei Funkverbindungen (6) mit der Steuerzentrale (3) unterhält, wobei die beiden Funkverbindungen (6) zwei unterschiedliche Frequenzbänder benutzen und dass die Sendeleistung an die Übertragungsfrequenz angepasst ist, wobei bei hohen Frequenzen die Sendeleistung höher ist.

2. Stellantrieb nach Anspruch 1, **dadurch gekennzeichnet, dass** die Funkverbindung (6) das LoRaWAN-Protokoll benutzt.

3. Stellantrieb nach Anspruch 1 oder 2, **dadurch gekennzeichnet, dass** wenigstens eine Antenne (8) eine gerichtete Antenne ist.

4. Stellantrieb nach einem der Ansprüche 1 bis 3, **dadurch gekennzeichnet, dass** wenigstens eine Antenne (8) außerhalb eines Gehäuses des Stellantriebs (2) angeordnet ist.

5. Stellantrieb nach einem der Ansprüche 1 bis 4, **dadurch gekennzeichnet, dass** der Stellantrieb (2) mehrere Antennen (8) aufweist, die einzeln oder gemeinsam verwendbar sind, insbesondere wobei eine Antenne (8) je nach Signalqualität verwendet wird.

6. Stellantrieb nach einem der Ansprüche 1 bis 5, **dadurch gekennzeichnet, dass** für jede Funkverbindung (6) eine separate Antenne (8) vorhanden ist.

7. Stellantrieb nach einem der Ansprüche 1 bis 6, **dadurch gekennzeichnet, dass** der Stellantrieb (2) eine autarke Energieversorgung aufweist und/oder die Funkverbindung (6) nur periodisch und/oder nur bei ausreichender Energieversorgung aktiviert.

8. Stellantrieb nach einem der Ansprüche 1 bis 7, **dadurch gekennzeichnet, dass** in dem Energiesparmodus nur die Kommunikationseinheit (5) aktiviert ist und/oder das Wecksignal eine zusätzliche Information enthält.

9. Steuerzentrale (3) mit einer Kommunikationseinheit, die zur Kommunikation mit einem Stellantrieb (2), insbesondere nach einem der Ansprüche 1 bis 8, über eine Funkverbindung (6) ausgebildet ist, wobei die Funkverbindung (6) auf einem Frequenzband im Sub-GHz Bereich liegt, insbesondere wobei in der Steuerzentrale (3) hinterlegbar und auswertbar ist, zu welchen Zeitpunkten der Stellantrieb (2) erreichbar ist und wobei die Steuerzentrale zum Senden eines Aufwecksignals über die Funkverbindung (6) ausgebildet ist.

10. System (1) bestehend aus einer Steuerzentrale (3) nach Anspruch 9 und wenigstens einem Stellantrieb (2) nach einem der Ansprüche 1 bis 8, die jeweils über eine Punkt-zu-Punkt Funkverbindung (6) mit der Steuerzentrale (3) in Verbindung stehen.

## Claims

1. Actuator (2) with a communication unit (5) which is designed to communicate with a control center (3) via a radio link (6) in the sub-GHz range, wherein the actuator (2) has an antenna (8) connected to the communication unit (5), wherein the actuator (2) has an energy-saving mode which can be ended through reception (26) of a wake-up signal via the radio link (6), **characterized in that** the communication unit (5) simultaneously maintains two radio links (6) to the control center (3), wherein the two radio links (6) use two different frequency bands, and **in that** the transmit power is adjusted according to the transmission frequency, wherein the transmit power is higher at high frequencies.

2. Actuator according to Claim 1, **characterized in that** the radio link (6) uses the LoRaWAN protocol.

3. Actuator according to Claim 1 or 2, **characterized in that** at least one antenna (8) is a directional antenna.

4. Actuator according to one of Claims 1 to 3, **characterized in that** at least one antenna (8) is disposed outside a housing of the actuator (2).

5. Actuator according to one of Claims 1 to 4, **characterized in that** the actuator (2) has a plurality of antennas (8) which are usable individually or jointly, in particular wherein one antenna (8) is used according to signal quality.

6. Actuator according to one of Claims 1 to 5, **characterized in that** a separate antenna (8) is present for each radio link (6).

7. Actuator according to one of Claims 1 to 6, **characterized in that** the actuator (2) has an autonomous energy supply and/or the radio link (6) is activated only periodically and/or only with an adequate energy supply.

8. Actuator according to one of Claims 1 to 7, **characterized in that** only the communication unit (5) is activated in the energy-saving mode and/or the wake-up signal contains additional information.

9. Control center (3) with a communication unit which is designed to communicate with an actuator (2), in particular according to one of Claims 1 to 8, via a radio link (6), wherein the radio link (6) is located on a frequency band in the sub-GHz range, in particular wherein the times at which the actuator (2) is reachable can be stored and evaluated in the control center (3), and the control center is designed to transmit a wake-up signal via the radio link (6) .

10. System (1) consisting of a control center (3) according to Claim 9 and at least one actuator (2) according to one of Claims 1 to 8 which are connected in each case via a point-to-point radio link (6) to the control center (3).

## Revendications

1. Actionneur (2) doté d'une unité de communication (5) qui est configurée pour communiquer avec une centrale de commande (3) par une liaison radio (6) sur la plage sub-GHz, lequel actionneur (2) comporte une antenne (8) relié à l'unité de communication (5) et lequel actionneur (2) possède un mode d'économie d'énergie auquel il peut être mis fin par la réception (26) d'un signal de réveil par la liaison radio (6), **caractérisé en ce que** l'unité de communication (5) entretient simultanément deux liaison radio (6) avec la centrale de commande (3), les deux liaison radio (6) utilisant deux bandes de fréquence différentes, et que la puissance d'émission est adaptée à la fréquence de transmission, la puissance d'émission étant plus forte pour les fréquences élevées.

2. Actionneur selon la revendication 1, **caractérisé en ce que** la liaison radio (6) utilise le protocole LoRaWAN.

3. Actionneur selon la revendication 1 ou 2, **caractérisé en ce qu'**au moins une antenne (8) est une antenne directive.

4. Actionneur selon une des revendications 1 à 3, **caractérisé en ce qu'**au moins une antenne (8) est disposée à l'extérieur d'un boîtier de l'actionneur (2).

5. Actionneur selon une des revendications 1 à 4, **caractérisé en ce que** cet actionneur (2) comporte plusieurs antennes (8) qui peuvent être utilisées individuellement ou ensemble, en particulier une antenne (8) étant utilisée en fonction de la qualité du signal.

6. Actionneur selon une des revendications 1 à 5, **caractérisé en ce qu'**une antenne (8) séparée est disponible pour chaque liaison radio (6).

7. Actionneur selon une des revendications 1 à 6, **caractérisé en ce que** cet actionneur (2) comporte une alimentation en énergie autonome et/ou active la liaison radio (6) uniquement périodiquement et/ou uniquement quand l'alimentation en énergie est suffisante.

8. Actionneur selon une des revendications 1 à 7, **caractérisé en ce que** seule l'unité de communication (5) est activée en mode d'économie d'énergie et/ou que le signal de réveil contient une information supplémentaire.

9. Centrale de commande (3) dotée d'une unité de communication qui est configurée pour communiquer avec un actionneur (2), en particulier selon une des revendications 1 à 8, par une liaison radio (6), la liaison radio se trouvant sur une bande de fréquence sur la plage sub-GHz, en particulier la centrale de commande (3) pouvant mémoriser et évaluer à quels moment l'actionneur (2) est joignable et la centrale de commande étant configurée pour envoyer un signal de réveil par la liaison radio (6).

10. Système (1) constitué d'une centrale de commande (3) selon la revendication 9 et d'un ou plusieurs actionneurs (2) selon les revendications 1 à 8 qui entrent chacun en liaison avec la centrale de commande (3) via une liaison radio point à point (6).
